# EUROPÄISCHE PATENTSCHRIFT

(11) **EP 1 577 567 B1**
(45) Veröffentlichungstag und Bekanntmachung des Hinweises auf die Patenterteilung: **08.03.2006**
(21) Anmeldenummer: 04004351.5
(22) Anmeldetag: 26.02.2004
(51) Int. Cl.: F16B 5/06, B60R 13/02

(54) **Befestigungs-Vorrichtung zur Verbindung zweier Bauteile sowie eine Bauteil-Anordnung mit der Befestigungs-Vorrichtung**
Device for connecting two elements and a structure with the device
Dispositif pour assembler deux éléments et structure utilisant cet dispositif

(43) Veröffentlichungstag der Anmeldung: 21.09.2005
(73) Patentinhaber: Faurecia Innenraum Systeme GmbH, 76767 Hagenbach (DE)
(72) Erfinder: Kretschmar, Jens, 36205 Sontra (DE); Hain, Dieter, 57539 Hövels (DE); Espe, Carsten, 57537 Selbach/Sieg (DE)
(74) Vertreter: Schatt, Markus F.

(56) Entgegenhaltungen:
- DE-A- 10 064 017
- US-A- 5 651 634
- US-A- 6 039 523
- US-B1- 6 196 607
- US-B1- 6 254 302

## Beschreibung

Die Erfindung betrifft eine Befestigungsvorrichtung mit einem Verbindungselement, das mit einem Bauteil oder einem Plattenelement verbunden werden kann, und mit einem Aufnahmeteil zur Verbindung derselben mit einem weiteren Bauteil oder Trägerelement, das zur Aufnahme des Verbindungselements vorgesehen ist, sowie eine Bauteil-Anordnung mit der Befestigungsvorrichtung.

Das Bauteil oder Plattenelement kann insbesondere eine Innenverkleidung beispielsweise eines Kraftfahrzeuges sein. Dementsprechend kann das weitere Bauteil oder Trägerelement insbesondere ein Karosserieteil eines Kraftfahrzeuges sein.

Ein derartiges Verbindungselement ist beispielsweise aus der DE 197 53 678 A1 bekannt. Ein zur Aufnahme in einem entsprechenden Führungselement der Befestigungs-Vorrichtung vorgesehenes tellerförmiges Oberteil ist über ein Federelement in Form einer Spiralfeder mit einem mit Verrastungselementen versehenen, halsförmigen Zwischenbereich verbunden, so dass sich das Oberteil quer zur axialen Richtung des Zwischenbereichs innerhalb vorgegebener Grenzen beweglich ist. Bei einem Einsatz des Verbindungselementes ist ein Unterteil desselben mittels der Verrastungselemente mit einem Trägerelement verbunden. Auf diese Weise ist das Plattenelement über das Federelement federnd und in vorbestimmten Grenzen relativ zueinander verschieblich mit dem Trägerelement verbunden.

Üblicherweise werden zur Verbindung des Trägerelementes mit dem Plattenelement mehrere derartige Verbindungselemente verwendet. Zusätzlich kann das Trägerelement und das Plattenelement über formschlüssige Verbindungen relativ zueinander fixiert sein.

Die Befestigungsvorrichtung des Trägerelements nach dem Stand der Technik weist einen Einführungshals auf, der vom Rand der Befestigungsvorrichtung zu einer Raststelle verläuft, um den halsförmigen Zwischenbereich des Verbindungselementes in einer Richtung quer zur axialen Richtung desselben in die Raststelle zu führen, während gleichzeitig das Oberteil desselben in einer weiteren Führung geführt wird.

Die aus dem Stand der Technik bekannten Gestaltungen des Einführungshalses und der Raststelle hat den Nachteil, dass Verbindungselemente, die in diese eingeführt sind, jedoch noch nicht mit einem Plattenelement verrastet sind, durch Vibrationen aus dieser herausfallen können. Dies ist insbesondere dann unerwünscht, wenn die Plattenelemente zusammen mit in Befestigungsvorrichtungen derselben eingeführten Verbindungselementen zu Produktions-Standorten transportiert werden müssen.

Aus der DE 195 04 692 A1 ist ein Verbindungselement mit einem an einem Pattenelement über einen Befestigungsbereich befestigbaren Oberteil bekannt, das einen Eingriffsbereich für ein Halteteil bekannt, welches mit einem Träger verbindbar ist. Das Halteteil weist einen als starrer Teller ausgebildeten ersten Flansch und einen zweiten, elastisch ausgebildeten Flansch auf. Zur Montage wird werden die Flansche des Halteteils mit den Flanschen in entsprechende Einführungsschlitze des Eingriffsbereichs eingeführt.

Auch aus der DE 100 23 109 A1 ist ein Verbindungselement zwischen einem Träger und einem Element bekannt. Das Verbindungselement weist einen Aufnahmeteil oder Retainer sowie ein mit dem Element verbindbares Halteteil mit einem Flansch auf. Damit sich das Halteteil bezogen auf den Aufnahmeteil oder Retainer elastisch in alle drei Raumrichtungen verlagern kann, besteht der Flansch aus einem äußeren Rind, der über spiralförmig gewundene Arme mit einem Hals des Halteteils verbunden ist.

Es ist die Aufgabe der Erfindung, eine Befestigungsvorrichtung mit einem Verbindungselement und einem Aufnahmeteil insbesondere zur Befestigung eines Bauteils an einem Trägerelement sowie eine Bauteil-Anordnung mit der Befestigungsvorrichtung bereitzustellen, bei der das Aufnahmeteil das Verbindungselement insbesondere bei Auftreten äußerer Kräfte sicher aufnimmt, auch wenn das Verbindungselement nicht in Verbindung mit dem Bauteil steht.

Diese Aufgabe wird mit den Merkmalen der unabhängigen Patentansprüche gelöst. Weitere Ausführungsformen sind in den auf diese rückbezogenen Unteransprüchen angegeben.

Erfindungsgemäß ist eine Befestigungsvorrichtung mit einem Verbindungselement vorgesehen, mit einem Verbindungselement, das mit einem Bauteil verbunden werden kann, und mit einem Aufnahmeteil zur Verbindung derselben mit einem Trägerelement, das zur Aufnahme des Verbindungselements vorgesehen ist, wobei das Verbindungselement einen Schaft und ein Tellerelement aufweist, die über ein Federelement miteinander verbunden sind, so dass diese gegen eine Federkraft relativ zueinander quer zur axialen Richtung des Verbindungselementes beweglich sind, wobei die Befestigungsvorrichtung einen von einer Randstelle aus verlaufenden Führungskanal und eine Raststelle für den Schaft aufweist und wobei ein Führungselement für das Tellerelement vorgesehen ist, so dass der Schaft in die Raststelle einführbar ist und dort mittels des Federelementes zentriert wird, wobei die Richtung der Verlängerung der Mittellinie der Führungsbahn an der Einmündung in die Raststelle versetzt zur Mittelinie der Führungsbahn des Führungselementes des Tellerelementes verläuft.

Die Mittellinie des Führungskanals kann einen geradlinigen Verlauf haben. Die Mittellinie des Führungskanals kann außerdem parallel und versetzt oder schräg zur Mittellinie des Führungselementes verlaufen.

Alternativ kann die Mittellinie des Führungskanals einen krummlinigen Verlauf haben, wobei die Mittellinie parabelförmig oder abschnittsweise kreisförmig verlaufen kann. Dabei kann die Mittellinie des Führungskanals in Bezug auf den Verlauf der Mittellinie des Führungselementes im Randbereich des Aufnahmeteils eine positive oder negative und im Bereich der Einmündungsstelle in die Raststelle eine negative bzw. positive Steigung aufweisen.

Generell kann die Mittellinie der Führungsbahn des Führungselementes für den Schaft einen geradlinigen Verlauf haben.

Das Führungselement für das Tellerelement kann Bestandteil der Befestigungsvorrichtung sein.

Die Befestigungsvorrichtung kann an einem Innenverkleidungsteil für eine Fahrzeugkarosserie angeordnet sein. Dieses kann das Bauteil oder das Trägerelement sein. Das weitere Bauteil kann ebenfalls Bestandteil einer Fahrzeugkarosserie sein.

Durch die erfindungsgemäße Lösung liegt das Verbindungselement sicher in dem Aufnahmeteil, unabhängig davon, ob dieses gleichzeitig im Eingriff oder in Verbindung mit dem Bauteil ist, das bestimmungsgemäß mit dem Aufnahmeteil zu verbinden ist. Dies ist insbesondere im Falle des Transports eines Bauteils vorteilhaft, da dieses zusammen mit dem einem Aufnahmeteil und einem darin eingepassten Verbindungselement transportiert werden kann, ohne dass die Gefahr besteht, dass sich das Verbindungselement aufgrund von Vibrationen oder anderen äußeren Einflüssen aus dem Aufnahmeteil löst.

Im folgenden wird die Erfindung an Hand der beiliegenden Figuren beschrieben. Es zeigen:
- Figur 1 eine Draufsicht auf eine Befestigungsvorrichtung mit einem Führungskanal, der nach dem Stand der Technik gebildet ist,
- Figur 2 eine Draufsicht auf eine Befestigungsvorrichtung mit einem Führungskanal, der eine erfindungsgemäße Gestalt aufweist.

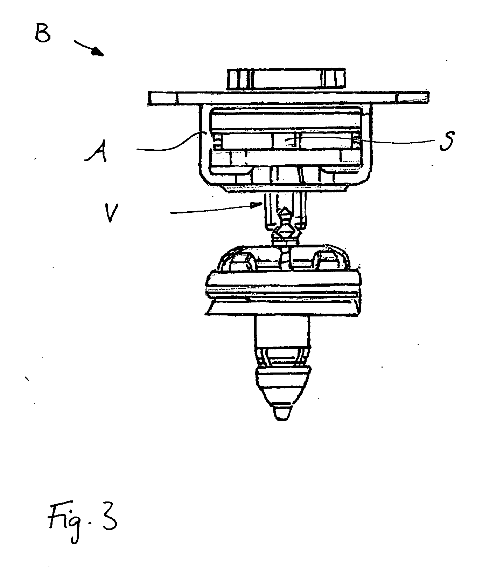

- Figur 3 eine schematische Schnittdarstellung einer Ausführungsform der erfindungsgemäßen Befestigungs-Vorrichtung.

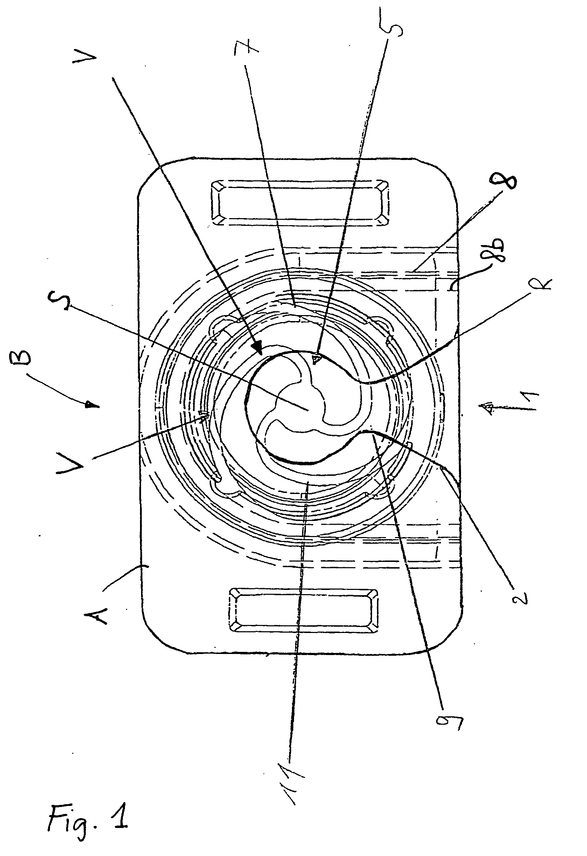

In der Figur 1, die eine Befestigungsvorrichtung B nach dem Stand der Technik zur Aufnahme eines Verbindungselementes V oder eines Tellers oder Tellerelements 7 eines Halteteils zeigt, ist die Konturlinie 2 eines Führungskanals 1 erkennbar. Durch diese kann der Schaft S eines Zwischenbereichs des Verbindungselementes V geführt werden, um den Teller 7 in eine Rast- oder Lagerstelle 5 einzuführen. In der Figur 1 sind auch Konturlinien des Tellers 7 des Verbindungselementes V dargestellt. Dieser wird formschlüssig in einem Führungselement 8, die ebenfalls an der Befestigungsvorrichtung oder an dem Plattenelement angeordnet ist, geführt.

Der Führungskanal 1 nach dem Stand der Technik hat eine Schlüssellochähnliche Gestalt, d.h. der Kanal 1 verengt sich vom Randbereich R des Befestigungselements bis zu einer Engstelle 9, zu dem sich der Führungskanals 1 hin öffnet. Die Engstelle soll das Herausfallen des Verbindungselementes V verhindern, wenn dieses in die Raststelle eingeführt ist.

Der Schaft S des Verbindungselementes V ist über ein Federelement 11 mit dem Teller 7 verbunden, um eine Befestigungs-Toleranz quer zur Längsrichtung des Befestigungs-Elements zuzulassen. Der Durchmesser des Schafts S ist geringfügig kleiner als die Öffnung der Engstelle 9 des Führungskanals 1.

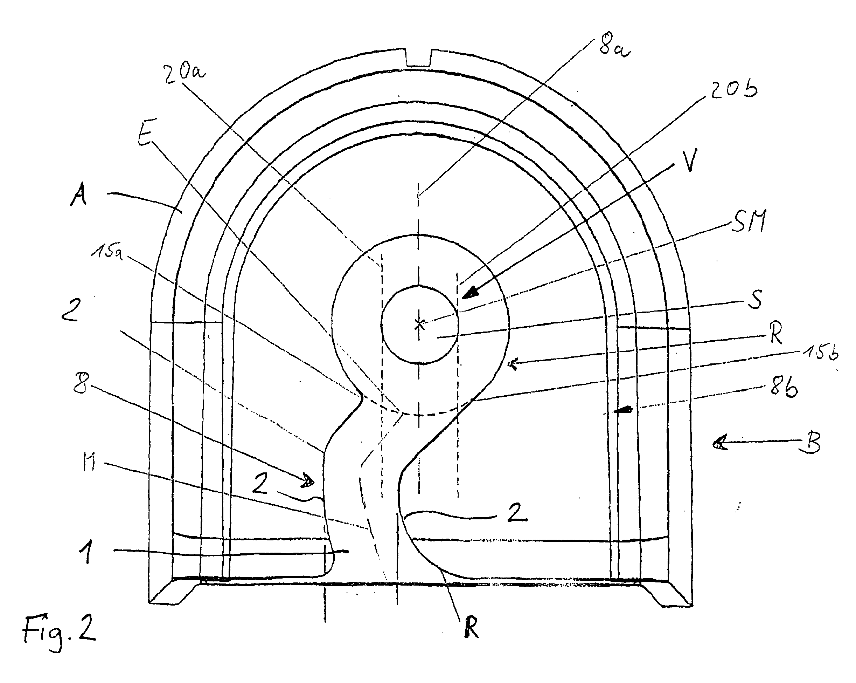

Die erfindungsgemäße Befestigungsvorrichtung ist in der Figur 2 dargestellt, wobei Merkmale mit gegenüber der Darstellung der Figur 1 gleicher Funktion mit denselben Bezugszeichen versehen sind. Die Figur 2 zeigt ein Aufnahmeteil A oder ein Eingriffsteil sowie den Querschnitt des Schafts S des Verbindungs-Elements V oder des Halteteils, das mit dem an dem Trägerelement zu befestigenden Bauteil verbunden und in das Aufnahmeteil A einführbar ist. Der Schaft 2 verbindet einen Teller oder Kopf (in Fig. 2 nicht dargestellt) mit einem Grundkörper wie einem Ankerfuß, über den das Verbindungselement mit dem zu befestigenden Bauteil verbindbar ist.

Die erfindungsgemäße Befestigungsvorrichtung B weist einen Führungskanal 1 mit Führungsflächen 2 auf, der von einem entsprechenden Randbereich R aus, an dem sich der Führungskanal 1 öffnet, zu einer Rast- oder Lagerstelle 5 mit einer Randfläche 6 verläuft. Das Führungselement 8 zur Führung des Tellers oder Kopfes des Verbindungselementes V ist in der Figur 2 in Form der Führungsbahn 8b dargestellt. In der Darstellung der Figur 2 befindet sich der Schaft S des Verbindungselementes V in der Raststelle 5 des Befestigungsvorrichtung B, also in der eingerasteten Stellung. Als Hilfestellung für die weitere Beschreibung ist in der Figur 2 die Mittellinie des Führungskanals 1 (Bezugszeichen M) eingetragen. Die Mittellinie 8a des Führungselementes 8 wird, wie aus der Figur 2 hervorgeht, bestimmt durch die Konturen oder Randlinien der Führungsbahn 8b, die die Bewegungsrichtung des Schafts S bzw. des Tellerelementes 7 bei dessen Einführen oder Herausführen aus dem Führungselement bzw. dem Aufnahmeteil A definieren.

Der Schaft S und der Teller 7 des Verbindungselements sind über ein Federelement 11 elastisch miteinander verbunden, so dass diese gegen eine Federkraft relativ zueinander beweglich sind. In der in der Figur 2 dargestellten Situation ist der Teller in einer zentralen Stellung zentriert in der Raststelle 5 gelegen.

Der Führungskanal 1 mündet an einer Einmündungsstelle E in die Raststelle 5.

In einer ersten Ausführungsform der Erfindung verläuft die Mittellinie M des Führungskanals 1 zumindest im Bereich der Einmündungsstelle E versetzt zu der Mittelinie 8a der Führungsbahn 8b des Führungselementes 8, die das Verbindungselement oder den Schaft S und somit auch das Tellerelement 7 beim Einsetzen in das Aufnahmeteil oder Eingriffsteil führt. Die Mittellinie M des Führungskanals 1 im Bereich der Raststelle kann dabei einen geradlinigen oder krummlinigen Verlauf haben. Bei einem geradlinigen Verlauf der Mittellinie M kann diese parallel und versetzt zur Mittellinie 8a oder schräg zu dieser verlaufen.

Als alternatives oder zusätzliches Bestimmungsmerkmal der Erfindung verläuft die Richtung der Verlängerung der Mittellinie M der Führungsbahn 1 schräg zur Mittelinie 8a der Führungsbahn 8b des Führungselementes 8, die das Verbindungselement oder den Schaft S und somit auch das Tellerelement 7 beim Einsetzen in das Aufnahmeteil oder Eingriffsteil führt.

In einer weiteren Ausführungsform der Erfindung verläuft die von der Einmündungsstelle E ausgehende geradlinige Verlängerung der Mittellinie M in einem vorbestimmten Abstand an dem Mittelpunkt der Raststelle vorbei. Die Raststelle ist in der Bewegungsebene des Halteteils gesehen vorzugsweise kreisförmig gebildet. Das bedeutet in Bezug auf einen eingeführten Teller eines Halteteils H, dass der Schaft S im wesentlichen zentriert in der Raststelle 5 gelegen ist. Bei dieser Ausführungsform kann die Mittellinie M des Führungskanals 1 im Bereich der Raststelle ebenfalls einen geradlinigen oder krummlinigen Verlauf haben, wobei vorzugsweise ein krummliniger Verlauf vorgesehen ist. Der krummlininge Verlauf ist vorzugsweise parabelförmig oder abschnittsweise kreisförmig gestaltet. Vorzugsweise weist dabei die Mittellinie M in Bezug auf den Verlauf der Mittellinie 8a im Randbereich R eine positive oder negative und im Bereich der Einmündungsstelle E eine negative bzw. positive Steigung auf.

Die Richtung der Verlängerung der Mittellinie M bestimmt sich bei der weiteren erfindungsgemäßen Ausführungsform an der Einmündungsstelle E, d.h. in der Bewegungsebene des Schafts S gesehen aus der Tangente an die Mittellinie an der Einmündungsstelle E. Die Einmündungsstelle E der Mittellinie liegt in dem Schnittpunkt derselben mit der gemeinsamen Schnittebene der Führungskanals 1 und der Raststelle 5, jeweils räumlich betrachtet.

Der Verlauf der Mittellinie 8a der Führungsbahn 8b des Führungselementes 8 für das Tellerelement 7 ist unterschiedlich zum Verlauf der Mittellinie M der Führungskanals für den Schaft S. Durch den unterschiedlichen Verlauf der beiden Mittellinien 8a und M werden der Schaft S und das Tellerelement 7 beim Einsetzen des Verbindungselementes in den Führungskanal 1 bzw. die Führungsbahn 8b relativ zueinander gegen die Federkraft des Federelementes 11 bewegt. Dasselbe gilt auch dann, wenn das Verbindungselement V in den Führungskanal 1 bzw. die Führungsbahn 8b eingesetzt ist, ohne dass die Befestigungsvorrichtung das Bauteil mit dem Trägerelement verbindet, d.h. wenn das Verbindungselement V lose, also z.B. ohne Verbindung mit dem Bauteil in der Befestigungsvorrichtung B sitzt.

Das Führungselement 8 für das Tellerelement 7 ist in einer bevorzugten Ausführungsform der Erfindung Bestandteil der Befestigungsvorrichtung B. Alternativ kann diese jedoch auch Bestandteil des Plattenelementes sein.

Die Übergangskonturen 15a, 15b des Führungskanals 1, mit denen dieser in die Raststelle 5 übergeht, können je nach Anwendungsfall angepasst sein. Diese können insbesondere derart gestaltet sein, dass der Schaft S unter Berücksichtigung einer vorgegebenen Toleranz gerade von der Raststelle 5 in den Führungskanal 1 gelangen kann.

Die Funktionsweise der erfindungsgemäßen Befestigungsvorrichtung mit dem Führungskanal 1 wird mit Hilfe der gestrichelt in die Figur 2 eingezeichneten Hilfslinien 20a, 20b beschrieben. Diese zeigen den Weg des Mittelpunkts SM des Schafts S, wenn das Verbindungselement V ohne eines Vorhandenseins eines Führungskanals 1 in der Befestigungsvorrichtung B aus einem Führungselement für das Tellerelement 7 herausgeführt wird. Die erfindungsgemäße Gestaltung des Führungskanals selbst sowie seine Anordnung relativ zur Raststelle 5 bewirkt, dass das Verbindungselement nur aus dem Führungskanals 1 bzw. dem Führungselement 8 herausgeführt werden kann, wenn diese dauerhaft mit einer vorbestimmten Kraft in die Bewegungsrichtung gedrückt wird, die dadurch das Führungselement 8 zur Führung des Tellerelementes 5 vorgegeben ist. Durch Vibration oder kurzzeitige Wechselbelastungen kann dies nicht geschehen. Auf diese Weise übt die Befestigungsvorrichtung mit der erfindungsgemäßen Gestaltung der Führungskanals 1 und der Raststelle 5 eine Sicherheits- oder Hemmfunktion aus.

## Patentansprüche

1. Befestigungsvorrichtung (B) mit einem Verbindungselement (V), das mit einem Bauteil verbunden werden kann, und mit einem Aufnahmeteil (A) zur Verbindung derselben mit einem Trägerelement, das zur Aufnahme des Verbindungselements vorgesehen ist, wobei das Verbindungselement einen Schaft (S) und ein Tellerelement (7) aufweist, die über ein Federelement (11) miteinander verbunden sind, so dass diese gegen eine Federkraft relativ zueinander quer zur axialen Richtung des Verbindungselementes beweglich sind, wobei die Befestigungsvorrichtung einen von einer Randstelle (R) aus verlaufenden Führungskanal (1) und eine Raststelle (5) für den Schaft (S) aufweist und wobei ein Führungselement (8) für das Tellerelement (7) vorgesehen ist, so dass der Schaft (S) in die Raststelle (7) einführbar ist und dort mittels des Federelementes (11) zentriert wird,
**dadurch gekennzeichnet, dass**
die Richtung der Verlängerung der Mittellinie (M) der Führungsbahn (1) an der Einmündung in die Raststelle (7) versetzt zur Mittelinie (8a) der Führungsbahn (8b) des Führungselementes (8) des Tellerelementes (7) verläuft.

2. Befestigungsvorrichtung nach dem Anspruch 1, **dadurch gekennzeichnet, dass** die Mittellinie (M) des Führungskanals (1) einen geradlinigen Verlauf hat.

3. Befestigungsvorrichtung nach dem Anspruch 2, **dadurch gekennzeichnet, dass** die Mittellinie (M) des Führungskanals (1) parallel und versetzt oder schräg zur Mittellinie (8a) des Führungselementes (8) verläuft.

4. Befestigungsvorrichtung nach dem Anspruch 1, **dadurch gekennzeichnet, dass** die Mittellinie (M) des Führungskanals (1) einen krummlinigen Verlauf hat.

5. Befestigungsvorrichtung nach dem Anspruch 4, **dadurch gekennzeichnet, dass** die Mittellinie (M) des Führungskanals (1) parabelförmig oder abschnittsweise kreisförmig verläuft.

6. Befestigungsvorrichtung nach dem Anspruch 5, **dadurch gekennzeichnet, dass** die Mittellinie (M) des Führungskanals (1) in Bezug auf den Verlauf der Mittellinie (8a) im Randbereich (R) des Aufnahmeteils (A) eine positive oder negative und im Bereich der Einmündungsstelle (E) in die Raststelle (5) eine negative bzw. positive Steigung aufweist.

7. Befestigungsvorrichtung nach einem der voranstehenden Ansprüche, **dadurch gekennzeichnet, dass** die Mittellinie (8a) der Führungsbahn (8b) des Führungselementes (8) für den Schaft (S) einen geradlinigen Verlauf hat.

8. Befestigungsvorrichtung nach einem der voranstehenden Ansprüche, **dadurch gekennzeichnet, dass** das Führungselement (8) für das Tellerelement (7) Bestandteil der Befestigungsvorrichtung (B) ist.

9. Befestigungsvorrichtung nach einem der voranstehenden Ansprüche, **dadurch gekennzeichnet, dass** die Befestigungsvorrichtung an einem Innenverkleidungsteil für eine Fahrzeugkarosserie angeordnet ist.

10. Bauteil mit einer Befestigungsvorrichtung nach einem der voranstehenden Ansprüche.

11. Bauteil nach dem Anspruch 10, **dadurch gekennzeichnet, dass** das Bauteil Bestandteil einer Fahrzeugkarosserie ist.

## Claims

1. Fixing device (B) having a connector (V), which can be connected to a component, and a mounting piece (A) for connection to a support member, which is intended to receive the connector, the connector having a shank (S) and a disc element (7), which are connected together by way of a spring element (11), so that these are moveable relative to one another against a spring force transversely to the axial direction of the connector, the fixing device having a guide channel (1) running from an edge position (R) and a detent (5) for the shank (S), and a guide element (8) being provided for the disc element (7), so that the shank (S) can be inserted into the detent (7) where it is centred by means of the spring element (11), **characterized in that** the direction of the extension of the centre line (M) of the guide path (1) at the entry into the detent (7) runs offset in relation to the centre line (8a) of the guide path (8b) of the guide element (8) of the disc element (7).

2. Fixing device according to Claim 1, **characterized in that** the centre line (M) of the guide channel (1) has a rectilinear course.

3. Fixing device according to Claim 2, **characterized in that** the centre line (M) of the guide channel (1) runs parallel and offset or obliquely in relation to the centre line (8a) of the guide element (8).

4. Fixing device according to Claim 1, **characterized in that** the centre line (M) of the guide channel (1) has a curvilinear course.

5. Fixing device according to Claim 4, **characterized in that** the centre line (M) of the guide channel (1) describes a parabola or an arc.

6. Fixing device according to Claim 5, **characterized in that** the centre line (M) of the guide channel (1) has a positive or negative gradient in relation to the course of the centre line (8a) in the edge area (R) of the mounting piece (A), and in the area of the entry point (E) into the detent (5) has a negative or positive gradient.

7. Fixing device according to any one of the preceding claims, **characterized in that** the centre line (8a) of the guide path (8b) of the guide element (8) for the shank (S) has a rectilinear course.

8. Fixing device according to any one of the preceding claims, **characterized in that** guide element (8) for the disc element (7) is an integral part of the fixing device (B).

9. Fixing device according to any one of the preceding claims, **characterized in that** the fixing device is arranged on an interior trim part for a vehicle body.

10. Component having a fixing device according to any one of the preceding claims.

11. Component according to Claim 10, **characterized in that** the component is an integral part of a vehicle body.

## Revendications

1. Dispositif de fixation (B) qui présente un élément de liaison (V) apte à être relié à un composant et une pièce de réception (A) qui sert à les relier à un élément de support prévu pour recevoir l'élément de liaison, l'élément de liaison présentant une tige (S) et un élément (7) à disque reliés l'un à l'autre au moyen d'un élément élastique (11) de manière à pouvoir être déplacés l'un par rapport à l'autre en opposition à une force élastique et transversalement par rapport à la direction axiale de l'élément de liaison, le dispositif de fixation étant doté d'un canal de guidage (1) qui s'étend à partir d'un emplacement périphérique (R) et qui présente un emplacement d'encliquetage (5) pour la tige (S), un élément de guidage (8) étant prévu pour l'élément (7) à disque de manière à pouvoir introduire la tige (S) dans l'emplacement d'encliquetage (5) et l'y centrer au moyen de l'élément élastique (11), **caractérisé en ce que** la direction de prolongement de la ligne médiane (M) du parcours de guidage (1) au niveau de l'entrée de l'emplacement d'encliquetage (5) est décalée par rapport à la ligne médiane (8a) du parcours de guidage (8b) de l'élément de guidage (8) de l'élément (7) à disque.

2. Dispositif de fixation selon la revendication 1, **caractérisé en ce que** la ligne médiane (M) du canal de guidage (1) est rectiligne.

3. Dispositif de fixation selon la revendication 2, **caractérisé en ce que** la ligne médiane (M) du canal de guidage (1) est parallèle et décalée par rapport à la ligne médiane (8a) de l'élément de guidage (8) ou est oblique par rapport à celle-ci.

4. Dispositif de fixation selon la revendication 1, **caractérisé en ce que** la ligne médiane (M) du canal de guidage (1) est courbe.

5. Dispositif de fixation selon la revendication 4, **caractérisé en ce que** la ligne médiane (M) du canal de guidage (1) est parabolique ou circulaire par tronçons.

6. Dispositif de fixation selon la revendication 5, **caractérisé en ce que** la ligne médiane (M) du canal de guidage (1) s'éloigne ou se rapproche de la ligne médiane (8a) dans la zone périphérique (R) de la pièce de réception (A) et, inversement, s'en rapproche ou s'en éloigne dans la zone de l'emplacement d'entrée (E) de l'emplacement d'encliquetage (5).

7. Dispositif de fixation selon l'une des revendications précédentes, **caractérisé en ce que** la ligne médiane (8a) du parcours de guidage (8b) de l'élément de guidage (8) de la tige (S) est rectiligne.

8. Dispositif de fixation selon l'une des revendications précédentes, **caractérisé en ce que** l'élément de guidage (8) de l'élément (7) à disque est un composant du dispositif de fixation (B).

9. Dispositif de fixation selon l'une des revendications précédentes, **caractérisé en ce qu'**il est agencé sur une pièce de revêtement intérieur d'une carrosserie de véhicule.

10. Composant qui présente un dispositif de fixation selon l'une des revendications précédentes.

11. Composant selon la revendication 10, **caractérisé en ce qu'**il fait partie d'une carrosserie de véhicule.
